# EUROPEAN PATENT SPECIFICATION

(11) **EP 2 418 071 B1**
(45) Date of publication and mention of the grant of the patent: **17.04.2013**
(21) Application number: 11176901.4
(22) Date of filing: 09.08.2011
(51) Int. Cl.: B29C 70/38, B29C 70/54

(54) **Cutter and anvil arrangement for a fiber placement head**
Schneide- und Ambossanordnung für einen Auflegekopf für Fasern
Couteau et agencement d'enclume pour tête de placement de fibres

(30) Priority: 13.08.2010 US 855989
(43) Date of publication of application: 15.02.2012
(73) Proprietor: MAG IAS, LLC, Sterling Heights, MI 48312 (US)
(72) Inventor: Vaniglia, Milo M., Cold Spring, 41076-8540 (US)
(74) Representative: Rau, Schneck & Hübner

(56) References cited:
- US-A1- 2008 302 483

## Description

The invention relates to a drive roll assembly for a fiber placement head for applying fiber composite material to an application surface according to the preamble of claim 1.

Composite lay-up machines are well known in the art. Such machines can be divided into two basic types, fiber placement machines that lay bundles of individual fibers onto a surface, and tape laying machines that apply fiber composite material in the form of a wide tape onto a surface. If the surface that receives the fiber composite material is fairly continuous, and does not have a lot of contour, a tape laying machine is normally used. If the surface is highly contoured or discontinuous because of the presence of openings in the surface, a fiber placement machine is normally used.

US 2008/0302483 A1 comprises a motorized head for applying fiber composite material to an application surface. The fiber placement head comprises a drive roll assembly with a displaceable cutter blade for shearing the fibers in accordance with the preamble of claim 1. There is a need to improve the shearing action of the cutter blade.

The objective of the present invention is to enhance the shearing action of the displaceable cutter of the drive roll assembly.

This objective is solved by a drive roll assembly according to claim 1.

A fiber placement head for a fiber placement utilizes individual roller sets comprising a drive roll and backup roll for each tow lane in which each drive roll has a tow cutting and restarting mechanism carried on the roll's circumference. Each drive roll is geared to and meshes with a back-up roll that is half the diameter of the drive roll and that captures the tow material in a drive roll nip that is formed therebetween. The drive roll carries two cutters and two restarting zones, each of which are 180 degrees apart and that mesh with one anvil on the back-up roll. Each cutter has a blade edge that that is angled to provide a shearing motion across the anvil edge. Each cutter is mounted in the drive roll by a blade guide insert that can be ground to precisely control the position of the cutter on the drive roll. The anvil can be flipped over when one side wears out to renew the anvil cutting edge.
- Figure 1: is perspective view of the fiber delivery mechanism in a fiber placement head.
- Figure 2: is a detail of a drive roll and a portion of a backup roll showing the two opposed cutting blades.
- Figure 3: is a detail sectional view showing the drive roll in position prior to cutting the composite material.
- Figure 4: is a detail sectional view showing the drive roll as the cutter begins to cut the composite material.
- Figure 5: is a detail sectional view showing the drive roll after the cutter has cut through the composite material.
- Figure 6: is a detail sectional view of the circular area shown in Figure 4 showing the cutter blade and the anvil.
- Figure 7: is a detail perspective view showing the cutter blade and the anvil.
- Figure 8: is a detail view taken along line 8-8 of Figure 6 showing the cutter blade prior to cutting the fiber tow.
- Figure 9: is a perspective view of an anvil.

Figures 10 and 11 are front and side views, respectively, of a cutter blade.

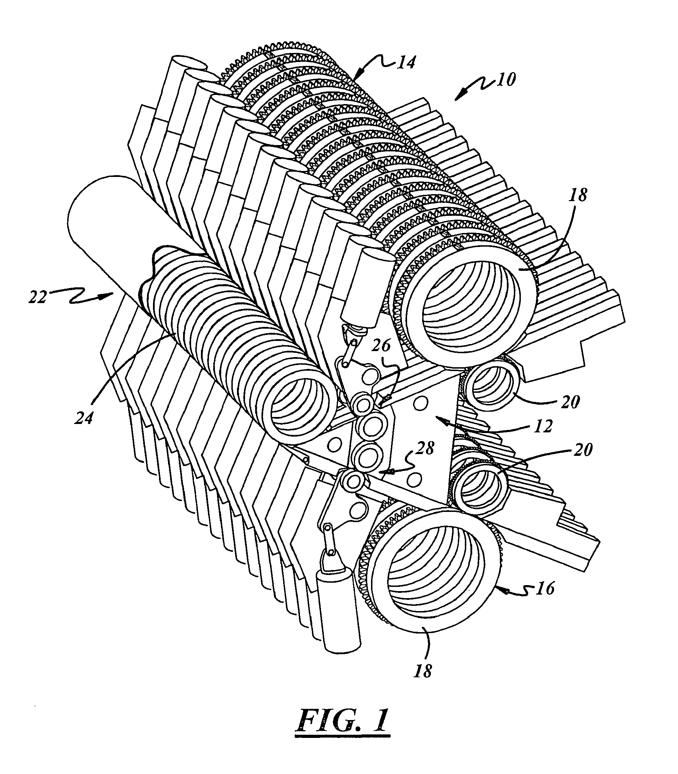

Figure 1 is a perspective view of the fiber delivery mechanism 10 in a fiber placement head. The mechanism 10 comprises a frame structure 12 which supports an upper array of drive roll assemblies 14 and lower array of drive roll assemblies 16. Each drive roll assembly comprises a drive roll 18 and a back-up roll 20 that is half the diameter of the drive roll 18. Each drive roll assembly 14 and 16 feeds fiber composite material along a fiber composite path or lane to the compaction roll 22 located at the front of the frame as well known in the art. The fiber composite materials in the upper and lower lanes are interleaved at the compaction roll 22 to form a continuous layer of side-by-side strips on the application surface. The compaction roll 22 is formed by a series of side by side roller segments 24 so that the outer surface of the compaction roll may adapt to the contour of the surface to which the composite material is being applied. The frame 12 also supports an upper array of restart pinch roll assemblies 26 and a lower array of restart pinch roll assemblies 28 that are positioned between the drive roll assemblies 14 and 16, respectively, and the compaction roll 22. The restart pinch roll assemblies 26 and 28 drive the fiber composite material to the compaction roll 22 after the material has been cut by one of the cutters on the drive roll.

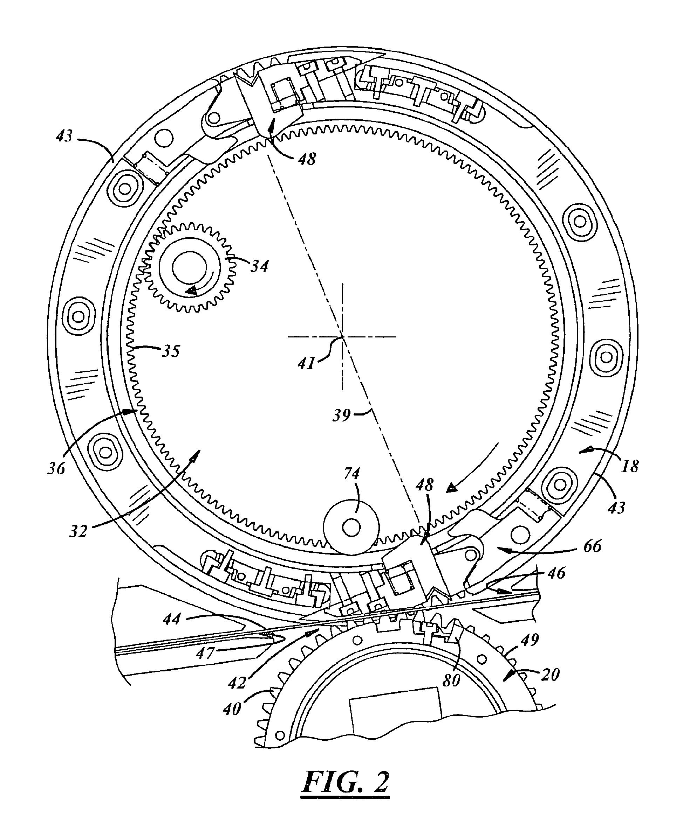

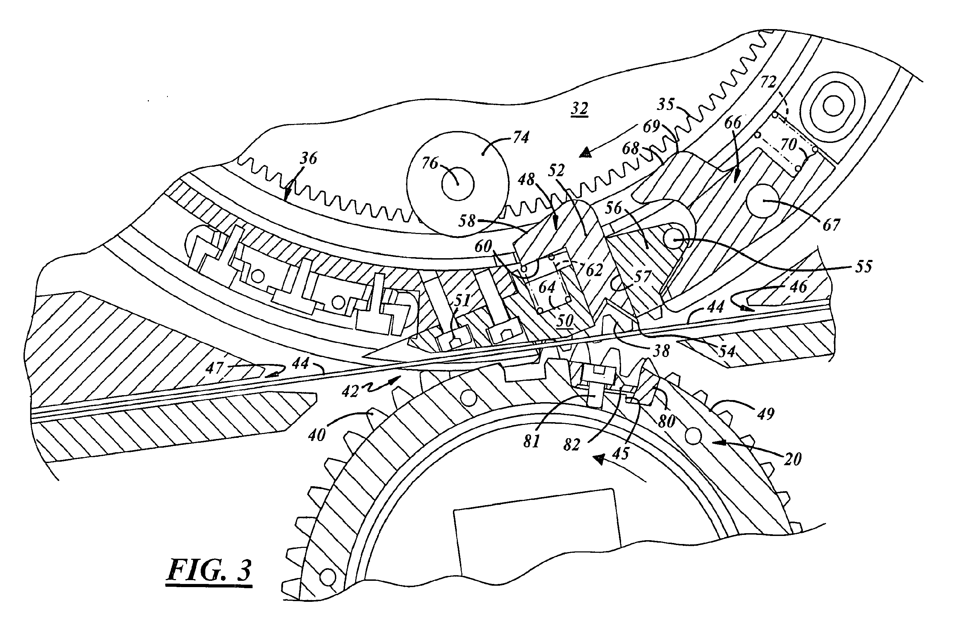

Figure 2 is a detail view of a drive roll 18 and a portion of a backup roll 20. The drive roll 18 is mounted by bearings (not shown) on a non-rotating drive roll hub 32 that is secured to the outside frame member 12. The drive roll 18 may be driven by a drive pinion 34 that engages the internal gear teeth 35 of a ring gear 36 that is attached to the drive roll 18. Rotation of the drive roll 18 is transferred to the backup roll 20 by a drive transfer arrangement that drivingly couples the drive roll and the backup roll together. In the embodiment shown, external gear teeth 38 on the ring gear 36, best seen in Figure 3, engage gear teeth 40 on the outside of the backup roll 20, to positively couple the rotation of the drive roll to the backup roll.

The drive roll has two cutter assemblies 48 spaced one hundred and eighty degrees apart so that a diameter line 39 joining corresponding parts of the two cuter assemblies passes through the center of rotation 41 of the drive roll. A drive surface 43 is formed on the outer circumference of the drive roll following each cutter assembly 48. A tow ejector foot 66 is positioned between the cutter assembly 48 and the drive surface 43 of the drive roll. The backup roll has an anvil 80 mounted on its outer surface, and a backup drive surface 49 is formed on the outer surface of the backup roll following the anvil. A drive roll nip 42 is formed between the drive roll 18 and the backup roll 20. Fiber tow 44 is delivered to the drive roll nip 42 from an upstream fiber path chute 46, and passes through the drive roll nip 42 into a downstream fiber path chute 47.

Figure 3 is a detail sectional view showing the drive roll in position prior to cutting the composite material. The cutter assembly 48 comprises a cutter retainer 50, a cutter blade 52, and a cutter guide insert 56 having a blade guide surface 57. The cutter retainer 50 is attached to the drive roll 18 by suitable fasteners such as screws 51 for rapid mounting and removal. The cutter blade 52 has a knife edge 54 and is mounted between the cutter retainer 50 and the blade guide surface 57 of the cutter guide insert 56. The cutter guide insert 56 mounts into the drive roll and is secured by a fastener post 55. The cutter guide insert 56 can be removed and the blade guide surface 57 can be ground to fit during assembly of the drive roll in order to precisely position the cutter blade 52 on the drive roll. The blade guide surface 57 is coincident with the diameter line 39 of the drive roll 18. A similar cutter assembly 48 is mounted on the opposite side of the drive roll 18, and the ability to precisely position the two diametrically opposed cutter blades 52 on the drive roll by means of the removable blade guide inserts 56 allows the cutter blades 52 to be precisely positioned on the diameter line 39. This precise positioning of the two cutter blades 52 allows the blades to mate with the one anvil 80 on the back up roll 20.

The cutter blade 52 has a ramp portion 58 and a spring retaining finger 60 that is formed below the ramp portion 58. A compression spring 62 is located in a spring pocket 64 formed in the cutter blade retainer 50, and the end of the spring 62 presses against the underside of the retaining finger 60. A tow ejector foot 66 is positioned behind the cutter blade retainer 50 and is mounted on a pivot shaft 67. The tow ejector foot 66 has a ramp surface 68 leading to a lobe 69, and a return spring seat surface 70. A compression spring 72 is mounted between the return spring seat surface 70 and another spring retaining surface (not shown) that is part of the drive roll assembly. A cam wheel 74 is mounted on a pivot 76 that is mounted on the non-rotating drive roll hub 32. The cam wheel 74 is in a position to impact on the ramp surface 58 of the cutter blade 52 and the ramp surface 68 of the tow ejector foot 66 as these elements rotate past the cam wheel. An anvil 80 and an anvil retainer 82 are mounted on the outer circumference of the backup roll 20. The anvil retainer 82 is held in place by one or more fastening elements such as a screw 81. Figure 3 shows the drive roll in a position just before the cam wheel 74 impacts on the ramp surface 58 of the cutter blade 52.

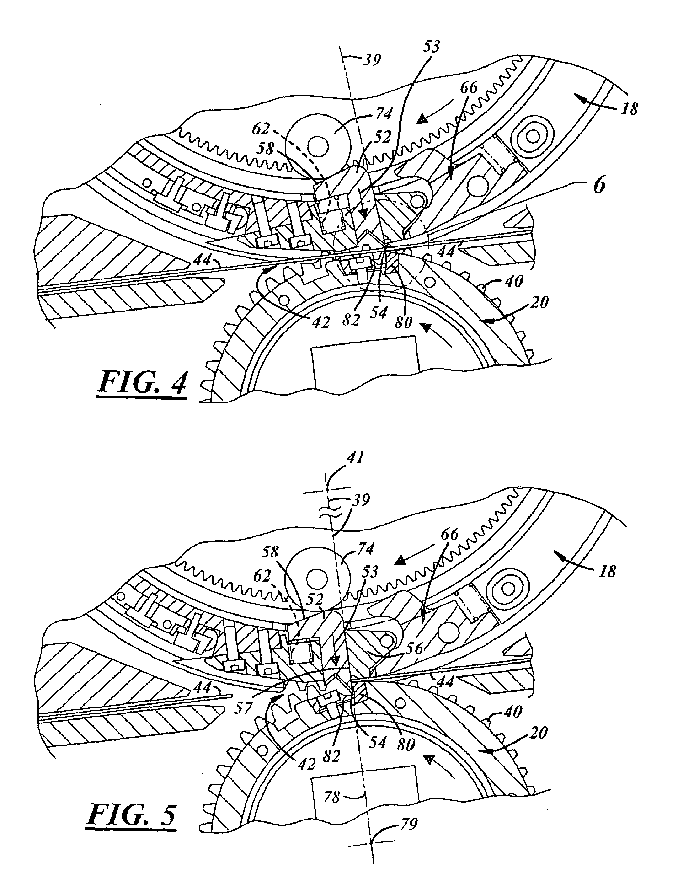

Figure 4 is a detail sectional view showing the drive roll as the cutter begins to cut the composite material. Rotation of the drive roll 18 causes the cam wheel 74 to displace the cutter blade 52 against the force of the compression spring 62, extending the knife edge 54 into the composite material 44 in the drive roll nip 42. The blade 52 is actuated by the cam wheel along a line 53 that is coincident with the diameter line 39 that passes through the center 41 of the drive roll 18.

Figure 5 is a detail sectional view showing the drive roll after the cutter has cut through the tow material 44. The knife edge 54 of the cutter blade 52 cuts through the composite material 44 and shears against the edge of the anvil 80 that is mounted on the back-up roll 20. The synchronized rotation of the drive roll 18 and the backup roll 20 ensures that the anvil 80 is always in a shearing relationship with the cutter blade 52 when the cam wheel 74 impacts the cutter.

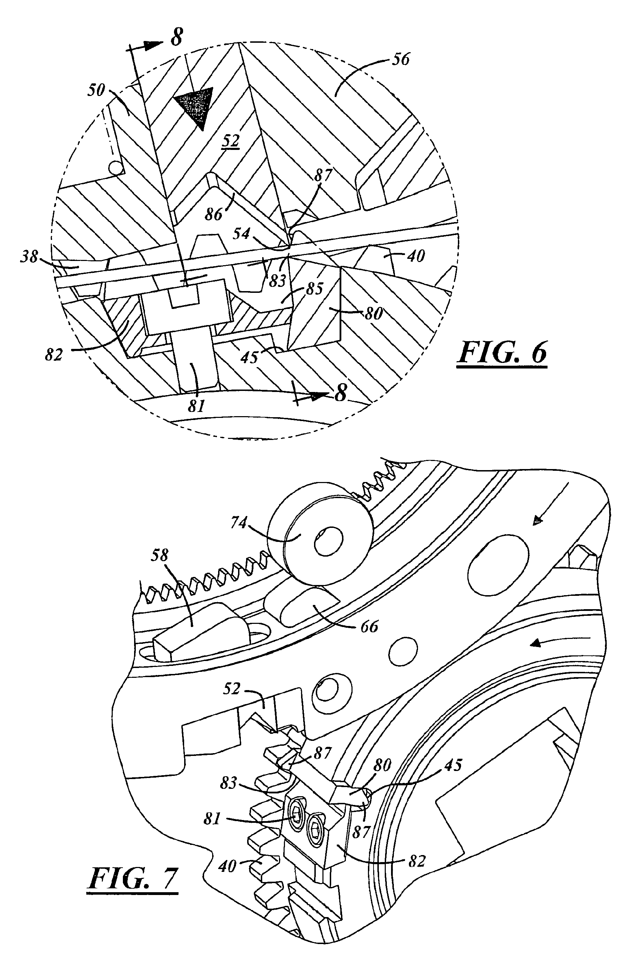

Figure 6 is a detail sectional view of the circular area shown in Figure 4 showing the cutter blade 52 and the anvil 80. The anvil 80 is held in an anvil pocket 45 on the backup roll 20 by the anvil retainer 82, and a recess 85 is formed between the body of the anvil 80 and the anvil retainer 82. The knife edge 54 of the cutter blade extends into the recess 85 as it shears the fiber tow against the shear edge 83 of the anvil 80. A guide foot 87 on one end of the shear edge 83 of the anvil is provided to receive and guide the tip 84 of the cutter blade 54 as the blade is driven into contact with the shear edge of the anvil. A tow pocket 86 is formed in the cutter blade 52 to allow the cutter blade to complete its cutting stroke without damaging the trailing end of the cut tow 44.

Figure 7 is a detail perspective view showing the cutter blade 52 and the anvil 80 after the drive roll 18 and the backup roll 20 have rotated past the position in which the cutter blade 52 cuts the tow material. The anvil 80 is held by the anvil retainer 82 in the anvil pocket 45 formed in the backup roll 20.

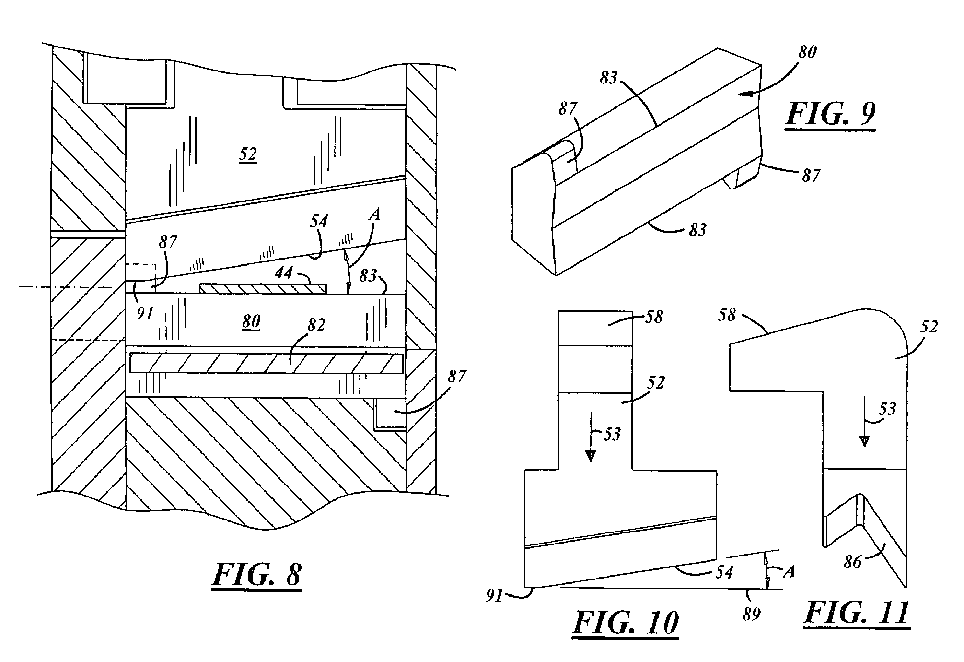

Figure 8 is a detail view taken along line 8-8 of Figure 6 showing the cutter blade prior to cutting the fiber tow. The cutting edge 54 of the blade is at an angle A to the shear edge 83 of the anvil 80. The blade initially contacts the guide foot 87 on the anvil. The guide foot 87 positions the blade 52 so that it sweeps tightly across the shear edge 83. The end 91 of the blade edge 54 that first contacts the guide foot 87 may be flattened to reduce the wear of the blade on the guide foot 87.

Figure 9 is a perspective view of an anvil 80. Although the element 80 is called an anvil, it does not function as an anvil in the sense that the knife edge 54 of the cutter blade does not cut the fiber tow 44 by pressing the fiber tow against the anvil surface. A shear edge 83 is formed along the leading upper surface of the anvil 80, and the cutter blade 52 cuts the tow by sweeping along the shear edge 83. The anvil 80 has a mirrored design with two guide feet 87 and two shear edges 83. This enables the anvil to be flipped over when one of the shear edges 83 wears so that the other shear edge can be used before replacing the anvil completely.

Figures 10 and 11 are front and side views, respectively, of a cutter blade 52. The cutting edge 54 of the blade is at an angle A to a line 89 that is parallel to the shear edge 83 of the anvil 80. The angle A may be between 5 and 25 degrees, and an angle of between 9 and 15 degrees is preferred. It has been determined that having an angle A on the blade provides an improved shearing motion across the shear edge 83. The blade 52 features a ramp 58 that contacts the cam wheel 74. The ramp 58 provides smooth and uniform motion of the blade 52 along the line of motion 53 as it rotates past the cam wheel 74 with minimum impact load on the cam wheel 74.

Having thus described the invention, various modifications and alterations will be apparent to those skilled in the art, which modifications and alterations will be within the scope of the invention as defined by the appended claims.

## Claims

1. A drive roll assembly for a fiber placement head for applying fiber composite material to an application surface, the drive roll assembly (14, 16) comprising:
- a drive roll (18) and a backup roll (20) comprising the drive roll assembly (14, 16);
- a drive roll nip (42) formed between the drive roll (18) and the backup roll (20);
- at least one cutter mechanism (48) mounted on the drive roll (18) for cutting fiber composite material (44); and,
- an anvil (80) mounted on the backup roll (20) for shearing against the cutter mechanism (48);
- a cam mounted inside the outer surface of the drive roll (18); and,
- a displaceable cutter comprising the cutter mechanism (48), the cam actuating the displaceable cutter from a retracted position to sever the fiber composite material (44);
**characterised by**
- a removable blade guide insert (56) providing a guide surface (57) for a cutter blade (52), the blade guide insert (56) having a guide surface (57) that is coincident with a radial line drawn through the center of rotation of the drive roll (18).

2. The drive roll assembly of claim 1 further comprising:
a rotatable cam wheel (74) comprising the cam.

3. The drive roll assembly of claim 1 or 2 further comprising:
a ramp surface formed on the displaceable cutter; whereby the ramp surface provides a smooth shearing action of a cutter blade (52) across the anvil (80) in response to a cam wheel (74) coming into contact with the ramp surface and depressing the cutter blade (52).

4. The drive roll assembly of at least one of claims 1 to 3 wherein a cam wheel (74) displaces a cutter blade (52) along a line that is coincident with a diameter line of the drive roll (18).

5. The drive roll assembly of claim 3 or 4 further comprising:
- a shear edge (83) formed on the anvil (80); and,
- a cutting edge (54) formed on the cutter blade (52), the cutting edge (54) being at an angle (A) to the shear edge (83) on the anvil (80).

6. The drive roll assembly of at least one of claims 1 to 5 further comprising:
two cutter mechanisms (48) mounted on the drive roll (18), the cutter mechanisms (48) being spaced one hundred and eighty degrees apart around the circumference of the drive roll (18).

7. The drive roll assembly of claim 6 further comprising:
two blade guide inserts (56) mounted on the drive roll (18), the two blade guide inserts (56) being spaced one hundred and eighty degrees apart around the circumference of the drive roll (18), whereby the two blade guide inserts (56) provide an adjustment mechanism for the position of the cutter blades (52) on the drive roll (18) so that the two opposed cutter guide surfaces (57) are exactly in line with one another and are located on a line that passes through the drive roll center (41).

8. The drive roll assembly of at least one of claims 1 to 7 further comprising:
a drive transfer arrangement between the drive roll (18)and the backup roll (20), whereby rotation of the drive roll (18) is synchronized with the rotation of the backup roll (20), and wherein the drive roll (18) is twice the diameter of the backup roll (20).

9. The drive roll assembly of claim 8 wherein the drive transfer arrangement between the drive roll (18) and the backup roll (20) synchronizes the rotation of the drive roll (18) and the backup roll (20) so that the at least one cutter on the drive roll (18) impacts the anvil (80) on the backup roll (20) when the cutter on the drive roll (18) is in a shearing relationship with the anvil (80) on the backup roll (20).

10. The drive roll assembly of claims 8 or 9 wherein the drive roll (18) has an outer diameter and the backup roll (20) has an outer diameter, and wherein the outer diameter of the drive roll (18) is twice the outer diameter of the backup roll (20).

11. The drive roll assembly of at least one of claims 8 to 10 further comprising:
two cutters mounted on the drive roll (18), whereby the drive transfer arrangement between the drive roll (18) and the backup roll (20) causes each of the two cutters to impact the anvil (80) on the backup roll (20) at two rotational positions of the drive roll (18).

12. The drive roll assembly of at least one of claims 1 to 11 further comprising:
a guide foot structure (87) provided on the end of the anvil (80), the guide foot (87) being configured to impact the blade tip and force a cutter blade (52) to sweep against the anvil shear edge (83) as the cutter blade (52) is depressed by a cam wheel (74).

13. The drive roll assembly of claim 12 further comprising:
a mirrored design for the cutter anvil (80), whereby the anvil (80) has two shear edges (83) and two guide feet (87), and whereby the anvil (80) may be remounted on the backup roll (20) after the first shear edge (83) of the anvil (80) wears out to expose the other shear edge (83) to the cutter blade (52).

## Patentansprüche

1. Antriebswalzenanordnung für einen Faser-Platzierungskopf zum Aufbringen eines Faser-Kompositmaterials auf einer Applikationsfläche, wobei die Antriebswalzenanordnung (14, 16) umfasst:
- eine Antriebswalze (18) und eine Gegenwalze (20), welche die Antriebswalzenanordnung (14, 16) umfassen;
- einen Antriebswalzenspalt (42), der zwischen der Antriebswalze (18) und der Gegenwalze (20) ausgebildet ist;
- wenigstens einen Schneidemechanismus (48), der auf der Antriebswalze (18) zum Schneiden des Faser-Kompositmaterials (44) montiert ist; und
- einen Amboss (80), der auf der Gegenwalze (20) zum Scheren gegen den Schneidemechanismus (48) montiert ist;
- eine Nocke, die innenseitig der Außenfläche der Antriebswalze (18) montiert ist; und
- eine verschiebbare Schneideeinrichtung, welche den Schneidemechanismus (48) umfasst, wobei die Nocke die verschiebbare Schneideeinrichtung von einer zurückgezogenen Position aus betätigt, um das Faser-Kompositmaterial (44) zu trennen;
**gekennzeichnet durch**
- einen entfernbaren Klingenführungseinsatz (56), der eine Führungsfläche (57) für eine Schneideklinge (52) bereitstellt, wobei der Klingenführungseinsatz (56) eine Führungsfläche (57) hat, die mit einer **durch** das Rotationszentrum der Antriebswalze (18) gezogenen radialen Linie zusammenfällt.

2. Antriebswalzenanordnung nach Anspruch 1, ferner mit:
einem drehbaren Nockenrad (74), das die Nocke umfasst.

3. Antriebswalzenanordnung nach Anspruch 1 oder 2, ferner mit:
einer auf der verschiebbaren Schneideeinrichtung ausgebildeten Rampenfläche,
wobei die Rampenfläche eine glatte Scherwirkung einer Schneideklinge (52) quer zum Amboss (80) liefert, und zwar in Reaktion auf ein in Kontakt mit der Rampenfläche kommendes und die Schneideklinge (52) herabdrückendes Nockenrad (74).

4. Antriebswalzenanordnung nach wenigstens einem der Ansprüche 1 bis 3, in welcher ein Nockenrad (74) eine Schneideklinge (52) entlang einer Linie verschiebt, welche mit einer Durchmesserlinie der Antriebswalze (18) zusammenfällt.

5. Antriebswalzenanordnung nach Anspruch 3 oder 4, ferner mit:
- einer Scherkante (83), die auf dem Amboss (80) ausgebildet ist; und
- einer Schneidekante (54), welche auf der Schneideklinge (52) ausgebildet ist, wobei die Schneidekante (54) in einem Winkel (A) zu der Scherkante (83) auf dem Amboss (80) vorliegt.

6. Antriebswalzenanordnung nach wenigstens einem der Ansprüche 1 bis 5, ferner mit:
zwei Schneidemechanismen (48), die auf der Antriebswalze (18) montiert sind, wobei die Schneidemechanismen (48) um einhundertachzig Grad entfernt zueinander um den Umfang der Antriebswalze (18) herum angeordnet sind.

7. Antriebswalzenanordnung nach Anspruch 6, ferner mit:
zwei Klingenführungseinsätzen (56), die auf der Antriebswalze (18) montiert sind,
wobei die zwei Klingenführungseinsätze (56) um einhundertachzig Grad entfernt voneinander um den Umfang der Antriebswalze (18) herum angeordnet sind, wobei die zwei Führungsklingeneinsätze (56) einen Stellmechanismus für die Position der Schneideklingen (52) auf der Antriebswalze (18) liefern, so dass die zwei entgegengesetzten Schneidführungsflächen (57) exakt in einer Linie zueinander liegen und auf einer Linie angeordnet sind, welche durch das Antriebswalzenzentrum (41) hindurchläuft.

8. Antriebswalzenanordnung nach wenigstens einem der Ansprüche 1 bis 7, ferner mit:
einer Antriebsübertragungsanordnung zwischen der Antriebswalze (18) und der Gegenwalze (20), wodurch eine Drehung der Antriebswalze (18) mit der Drehung der Gegenwalze (20) synchronisiert ist, und wobei die Antriebswalze (18) den doppelten Durchmesser der Gegenwalze (20) hat.

9. Antriebswalzenanordnung nach Anspruch 8, in welcher die Antriebsübertragungsanordnung zwischen der Antriebswalze (18) und der Gegenwalze (20) die Drehung der Antriebswalze (18) und der Gegenwalze (20) synchronisiert, so dass die wenigstens eine Schneideeinrichtung auf der Antriebswalze (18) auf den Amboss (80) auf der Gegenwalze (20) stößt, wenn die Schneideeinrichtung auf der Antriebswalze (18) in einer scherenden Beziehung zu dem Amboss (80) auf der Gegenwalze (20) steht.

10. Antriebswalzenanordnung nach Anspruch 8 oder 9, in welcher die Antriebswalze (18) einen Außendurchmesser hat und die Gegenwalze (20) einen Außendurchmesser hat, und wobei der Außendurchmesser der Antriebswalze (18) das Doppelte des Außendurchmessers der Gegenwalze (20) beträgt.

11. Antriebswalzenanordnung nach wenigstens einem der Ansprüche 8 bis 10, ferner mit:
zwei Schneideeinrichtungen, die auf der Antriebswalze (18) montiert sind, wobei die Antriebsübertragungsanordnung zwischen der Antriebswalze (18) und der Gegenwalze (20) jede der zwei Schneideinrichtungen dazu veranlasst, an den Amboss (80) auf der Gegenwalze (20) an zwei Drehpositionen der Antriebswalze (18) anzustoßen.

12. Antriebswalzenanordnung nach wenigstens einem der Ansprüche 1 bis 11, ferner mit:
einer Führungsfußstruktur (87), die auf dem Ende des Amboss (80) vorgesehen ist,
wobei der Führungsfuß (87) so konfiguriert ist, dass dieser die Klingenspitze anstößt und eine Schneideklinge (52) dazu zwingt, gegen die Amboss-Scherkante (83) zu streichen, wenn die Schneideklinge (52) durch ein Nockenrad (74) herabgedrückt wird.

13. Antriebswalzenanordnung nach Anspruch 12, ferner mit:
einem gespiegelten Design für den Schneideamboss (18), wobei der Amboss (80) zwei Scherkanten (83) und zwei Führungsfüße (87) hat und wobei der Amboss (80) auf der Gegenwalze (20) abmontiert werden kann, nachdem die erste Scherkante (83) des Ambosses (80) abgenutzt ist, um die andere Scherkante (83) der Schneideklinge (52) freizugeben.

## Revendications

1. Ensemble de rouleaux d'entraînement pour une tête de placement de fibres destinée à appliquer un matériau composite à fibres à une surface d'application, l'ensemble de rouleaux d'entraînement (14, 16), comprenant :
un rouleau d'entraînement (18) et un rouleau déflecteur (20) comprenant l'ensemble de rouleaux d'entraînement (14, 16) ;
un pincement de rouleau d'entraînement (42) formé entre le rouleau d'entraînement (18) et le rouleau déflecteur (20) ;
au moins un mécanisme de coupe (48) monté sur le rouleau d'entraînement (18) pour couper un matériau composite à fibres (44) ; et
une enclume (80) montée sur le rouleau déflecteur (20) pour cisailler contre le mécanisme de coupe (48) ;
une came montée à l'intérieur de la surface extérieure du rouleau d'entraînement (18) ; et,
un dispositif de coupe déplaçable comprenant le mécanisme de coupe (48), la came permettant d'actionner le dispositif de coupe déplaçable depuis une position rétractée pour couper le matériau composite à fibres (44) ;
**caractérisé par**
un insert de guidage de lame amovible (56) fournissant une surface de guidage (57) pour une lame de coupe (52), l'insert de guidage de lame (56) présentant une surface de guidage (57) qui coïncide avec une ligne radiale passant par le centre de rotation du rouleau d'entraînement (18).

2. Ensemble de rouleaux d'entraînement de la revendication 1, comprenant en outre :
une roue à came rotative (74) comprenant la came.

3. Ensemble de rouleaux d'entraînement de la revendication 1 ou 2, comprenant en outre :
une surface de rampe formée sur le dispositif de coupe déplaçable ; moyennant quoi la surface de rampe fournit une action de cisaillement lisse d'une lame de coupe (52) à travers l'enclume (80) en réponse à une roue à came (74) venant en contact avec la surface de rampe et appuyant sur la lame de coupe (52).

4. Ensemble de rouleaux d'entraînement d'au moins l'une des revendications 1 à 3, dans lequel une roue à came (74) déplace une lame de coupe (52) le long d'une ligne qui coïncide avec une ligne de diamètre du rouleau d'entraînement (18).

5. Ensemble de rouleaux d'entraînement de la revendication 3 ou 4, comprenant en outre :
un bord de cisaillement (83) formé sur l'enclume (80) ; et,
un bord de coupe (54) formé sur la lame de coupe (52), le bord de coupe (54) étant situé à un angle (A) au bord de cisaillement (83) sur l'enclume (80).

6. Ensemble de rouleaux d'entraînement d'au moins l'une des revendications 1 à 5, comprenant en outre :
deux mécanismes de coupe (48) montés sur le rouleau d'entraînement (18), les mécanismes de coupe (48) étant espacés de 180 degrés autour de la circonférence du rouleau d'entraînement (18).

7. Ensemble de rouleaux d'entraînement de la revendication 6, comprenant en outre :
deux inserts de guidage de lame (56) montés sur le rouleau d'entraînement (18), les deux inserts de guidage de lame (56) étant espacés de 180 degrés autour de la circonférence du rouleau d'entraînement (18), moyennant quoi les deux inserts de guidage de lame (56) fournissent un mécanisme de réglage de la position des lames de coupe (52) sur le rouleau d'entraînement (18) de sorte que les deux surfaces opposées de guidage de coupe (57) soient exactement alignées et soient situées sur une ligne qui passe à travers le centre de rouleau d'entraînement (41).

8. Ensemble de rouleaux d'entraînement d'au moins l'une des revendications 1 à 7, comprenant en outre :
un agencement de transfert d'entraînement entre le rouleau d'entraînement (18) et le rouleau déflecteur (20), moyennant quoi la rotation du rouleau d'entraînement (18) est synchronisée avec la rotation du rouleau déflecteur (20), et où le rouleau d'entraînement (18) est deux fois le diamètre du rouleau déflecteur (20).

9. Ensemble de rouleaux d'entraînement de la revendication 8, dans lequel l'agencement de transfert d'entraînement entre le rouleau d'entraînement (18) et le rouleau déflecteur (20) synchronise la rotation du rouleau d'entraînement (18) et du rouleau déflecteur (20) de sorte que l'au moins un dispositif de coupe sur le rouleau d'entraînement (18) entre en contact avec l'enclume (80) sur le rouleau déflecteur (20) lorsque le dispositif de coupe sur le rouleau d'entraînement (18) est en relation de cisaillement avec l'enclume (80) sur le rouleau déflecteur (20).

10. Ensemble de rouleaux d'entraînement de la revendication 8 ou 9, dans lequel le rouleau d'entraînement (18) présente un diamètre extérieur et le rouleau déflecteur (20) présente un diamètre extérieur, et
où le diamètre extérieur du rouleau d'entraînement (18) est deux fois le diamètre extérieur du rouleau déflecteur (20).

11. Ensemble de rouleaux d'entraînement d'au moins l'une des revendications 8 à 10, comprenant en outre :
deux dispositifs de coupe montés sur le rouleau d'entraînement (18), moyennant quoi l'agencement de transfert d'entraînement entre le rouleau d'entraînement (18) et le rouleau déflecteur (20) amène chacun des deux dispositifs de coupe à entrer en contact avec l'enclume (80) sur le rouleau déflecteur (20) à deux positions de rotation du rouleau d'entraînement (18).

12. Ensemble de rouleaux d'entraînement d'au moins l'une des revendications 1 à 11, comprenant en outre :
une structure de pied de guidage (87) prévue sur l'extrémité de l'enclume (80), le pied de guidage (87) étant configuré pour entrer en contact avec la pointe de lame et forcer une lame de coupe (52) à balayer sur le bord de cisaillement d'enclume (83) à mesure que la lame de coupe (52) est enfoncée par une roue à came (74).

13. Ensemble de rouleaux d'entraînement de la revendication 12, comprenant en outre :
une conception multi-facette pour l'enclume de coupe (80), moyennant quoi l'enclume (80) présente deux bords de cisaillement (83) et deux pieds de guidage (87), et moyennant quoi l'enclume (80) peut être remontée sur le rouleau déflecteur (20) après usure du premier bord de cisaillement (83) de l'enclume (80) pour exposer l'autre bord de cisaillement (83) à la lame de coupe (52).
